## Europäisches Patentamt
## European Patent Office
## Office européen des brevets

(19)

(11) Numéro de publication: **0 004 811**
**B1**

(12)

# FASCICULE DE BREVET EUROPEEN

(45) Date de publication du fascicule de brevet: **16.09.81**

(51) Int. Cl.³: **G 02 B 27/32, H 04 N 9/09**

(21) Numéro de dépôt: **79400199.0**

(22) Date de dépôt: **28.03.79**

(54) Diascope pour une caméra de télévision.

(30) Priorité: **11.04.78 FR 7810612**

(43) Date de publication de la demande:
**17.10.79 Bulletin 79/21**

(45) Mention de la délivrance du brevet:
**16.09.81 Bulletin 81/37**

(84) Etats Contractants Désignés:
**BE DE GB NL**

(56) Documents cités:
**DE - A - 2 457 364**
**US - A - 3 381 084**

**Journal of the SAMPTE, volume 81, janvier 1972, n° 1,**
**NEW YORK (US)**
**D. G. PERKINS: "Features of a new three-tube color television camera" pages 13—20**

(73) Titulaire: **THOMSON-CSF**
**173, Boulevard Haussmann**
**F-75360 Paris Cedex 08 (FR)**

(72) Inventeur: **Moutet, Louis**
**"THOMSON-CSF" SCPI 173, bld Haussmann**
**F-75360 Paris Cedex 08 (FR)**
Inventeur: **Moenne-Loccoz, Jean-Marc**
**"THOMSON-CSF" SCPI 173, bld Haussmann**
**F-75360 Paris Cedex 08 (FR)**

(74) Mandataire: **Courtellemont, Alain et al,**
**"THOMSON-CSF" 173, bld Haussmann**
**F-75360 Paris Cedex 08 (FR)**

## Diascope pour une caméra de télévision

La présente invention concerne un diascope pour caméra de télévision, comportant une source lumineuse et un support auquel sont fixés un porte objet, un objectif et un dispositif déviateur des rayons lumineux.

De tels diascopes sont connus dans lesquels le support est, par exemple, constitué par le porte-filtre de la caméra de télévision. En position de diascope le porte-filtre amène l'ensemble constitué par le porte-objet avec sa mire, l'objectif ou les objectifs et le dispositif déviateur dans une position telle que la source lumineuse, qui est généralement fixe et extérieure au porte-filtre, envoie un faisceau qui éclaire la mire et traverse l'objectif du diascope; ce faisceau est ensuite dévié par le dispositif déviateur de manière à suivre le même trajet que celui qui est suivi par la lumière provenant de l'objectif de la caméra lors de prises de vues.

Les supports de ce type de diascopes sont généralement de faible épaisseur (quelques millimètres). Or la place disponible derrière l'objectif de la caméra obige à ce que les pièces fixées au support soient disposées dans des espaces aménagés à l'intérieur du support. Ces pièces sont donc de petite taille et il est connu de les coller au support; mais ces montages par collage présentent différents inconvénients; ils sont délicats à réaliser car la position de chacune des pièces doit être réglée avec précision avant collage et le réglage, pour être refait, nécessite que la pièce soit préalablement décollée.

La présente invention a pour but un diascope qui ne présente pas les inconvénients ci-avant mentionnés tout en n'étant pas plus coûteux et pas moins sûr, au point de vue du fonctionnement, que les diascopes connus.

Selon l'invention, il est possible d'atteindre ce résultat à partir d'un diascope pour caméra de télévision comportant: un support et un porte-objet, un objectif et un dispositif déviateur de rayons lumineux fixés sur le support. Pour cela le diascope doit comporter également un premier et un deuxième moyen de pression solidaires du support et tendant à enfoncer le porte-objet et l'objectif dans une fente rectiligne pratiquée dans le support et dont la section s'évase du fond vers le haut, et un moyen de liaison entre le dispositif déviateur et le support, ce moyen de liaison comportant: un moyen de fixation solidaire du dispositif déviateur; trois moyens d'écartement réglables donnant chacun un écartement réglable entre un point du support et un point du moyen de fixation; et un troisième moyen de pression solidaire du support et tendant à amener le moyen de fixation en contact avec le support.

La présente invention sera mieux comprise et d'autres caractéristiques apparaîtront à l'aide de la description ci-après et des figures s'y rapportant qui représentent:

—la figure 1, la vue partielle schématique d'une caméra de télévision comportant un diascope selon l'invention,

—la figure 2, une vue détaillée d'une partie du diascope de la figure 1.

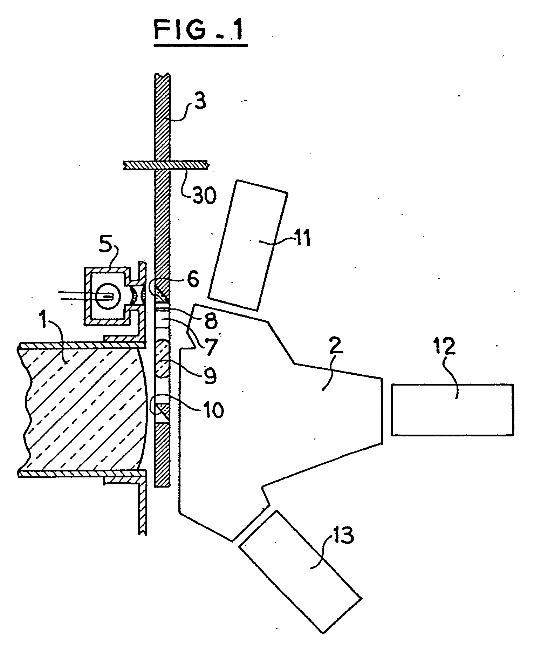

La figure 1 est une vue partielle, schématique d'une caméra de prise de vues de télévision en couleur, comportant un dispositif selon l'invention.

Sur la figure 1 apparaissent:

—un objectif, 1, pour les prises de vues; cet objectif est montré en vue partielle et en coupe,

—une source lumineuse, 5, comportant une lampe et un condenseur de lumière,

—un disque-support 3 avec son axe de rotation 30; ce disque-support sert, dans l'exemple décrit, à la fois de support pour les filtres de la caméra et pour le diascope,

—un ensemble optique comportant: un prisme 6 destiné à dévier la lumière provenant de la source 5 quand, comme indiqué sur la figure 1, le disque 3 place le prisme 6 devant cette source; un porte-objet, 7, avec sa mire, 8; un objectif 9; et un prisme 10 destiné à dévier en direction d'un séparateur trichrome, 2, la lumière provenant de la source 2 après qu'elle ait traversé le prisme 6, le porte-objet 7 et l'objectif 9,

—le séparateur trichrome 2,

—trois tubes d'analyse 11, 12 et 13.

A titre d'indication, le disque-support qui est décrit est un disque de 130 mm de diamètre et de 4 mm d'épaisseur réalisé en alliage d'aluminium.

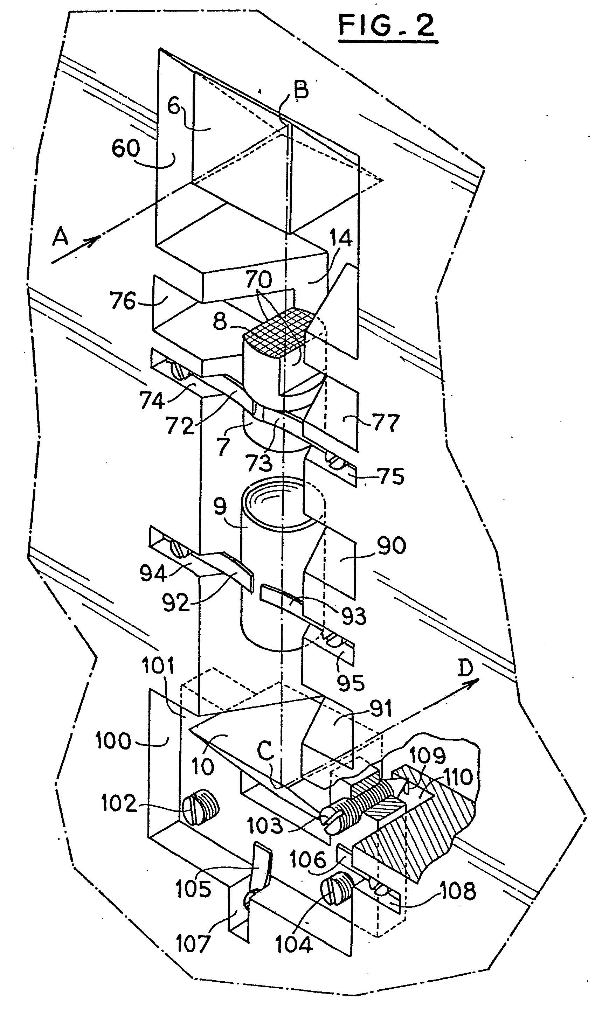

La figure 2 est une vue détaillée qui montre une partie du disque support 3 et les éléments 6 à 10 du diascope.

Sur cette vue a été représenté un rayon lumineux ABCD provenant de la source 5 (figure 1) et se dirigeant vers le séparateur trichrome 2 (figure 1).

Le prisme 6 est disposé dans un trou, 60, qui traverse le disque-support 3. Le rayon lumineux ABCD est horizontal quand il pénètre dans le prisme 6 par une face verticale; il se réfléchit dans le prisme sur une face oblique (point B) par laquelle le prisme 6 est collé sur une paroi du trou 60; le rayon lumineux sort ensuite verticalement du prisme 6 par une face horizontale de ce dernier.

Le rayon lumineux ABCD traverse alors le porte-objet 7 avec sa mire 8. Le porte-objet a la forme d'un cylindre; ce cylindre s'appuie sur les parois inclinées d'une fente rectiligne en V, 14, creusée dans le disque 3. Deux ressorts à lame, 72, 73, fixés par l'une de leurs extrémités dans des encoches, 74, 75, pratiquées sur les bords de la fente 14, exercent sur le porte-objet 7 une pression qui maintient ce dernier dans la rainure. Pour éviter que le porte-objet puisse se déplacer longitudinalement dans la fente, le porte-objet présente une gorge cylindrique 71;

ainsi les ressorts à lame 72, 73, dont l'extrémité libre est engagée dans cette gorge, jouent le rôle d'arrêtoirs longitudinaux pour le porte-objet. Le porte-objet comporte deux facettes parallèles, 70, destinées à permettre l'orientation angulaire de la mire 8 grâce à une clé à fourche non représentée dont l'écartement est légèrement supérieur à la distance entre les deux facettes; deux encoches 76, 77 sont prévues sur les côtés de la fente en V pour permettre un débattement angulaire suffisant pour la clé à fourche. Il est à noter que le réglage de la position de la mire 8 ne peut se faire, faute de place, quand l'objectif de prise de vues 1 est en place et que ce réglage nécessite que l'objectif 1 soit retiré de manière que les facettes 70 du porte-objet 7 soient facilement accessibles. Il est à noter également que le retrait de l'objectif de prise de vues 1 n'a pas d'inconvénient étant donné que, lorsque le diascope est dans sa position de fonctionnement l'objectif de prise de vues n'est pas utilisé.

Après avoir traversé le porte-objet 7, le rayon ABCD rencontre l'objectif 9. L'objectif 9 a la forme d'un cylindre; ce cylindre s'appuie sur les parois de la fente 14. Deux resorts à lame 92, 93, fixés par l'une de leurs extrémités dans des encoches 94, 95 pratiquées sur le bord de la fente 14, exercent sur l'objectif 9 une pression qui maintient ce dernier dans la fente. Deux encoches, 90, 91 sont prévues dans l'un des bords de la fente 14 de façon à permettre, avec une tige non représentée (par exemple la lame d'un tourne-vis), de déplacer l'objectif en direction de l'une ou l'autre des extrémités de la fente pour effectuer la mise au point de l'image de la mire 8 sur les tubes d'analyse 11, 12, 13, représentés sur la figure 1; à cet effet la tige est utilisée comme un levier dont les deux points d'appui sont le bord de l'une des extrémités de l'objectif et la paroi de l'une des encoches 90, 91. Comme pour le réglage du porte-objet, le réglage de l'objectif 9 nécessite que l'objectif de prise de vues 1 soit momentanément retiré.

Après être sorti de l'objectif 9 le rayon ABCD pénètre dans le prisme 10 par une face horizontale de ce dernier; il se réfléchit dans le prisme sur une face oblique (point C); le rayon lumineux sort ensuite horizontalement du prisme 10 par une face verticale de ce dernier.

Le prisme 10 est disposé dans un trou, 100, qui traverse le disque-support 3; il est maintenu dans ce trou au moyen d'un ensemble constitué d'une pièce en U, 101, de trois vis, 102 à 104, qui traversent la pièce en U et de deux ressorts à lame 105, 106.

Le prisme 10 est maintenu, par collage, entre les deux barres parallèles de la pièce en U.

Les trois vis, 102 à 104, sont parallèles entre elles et disposées en triangle. Elles se vissent dans la pièce en U, 101, et appuient par leur pointe sur un rebord 110 de trou 100; une partie du disque 3 et de la pièce en U a été arrachée pour montrer comment la vis 103 vient en contact avec la rebord 110.

Les deux ressorts à lame 105 et 106 sont fixés par l'une de leurs extrémités respectivement dans deux encoches 107, 108, aménagées sur le bord du trou 100. Le ressort 105 appuie sur la pièce en U, 101, en un endroit situé sensiblement entre les vis 102 et 104 tandis que le ressort 106 appuie sur la pièce en U en un endroit situé sensiblement entre les vis 103 et 104. Ainsi maintenue la pièce en U autorise un règlage de l'orientation du prisme 10 par action sur les vis 102 à 104. Un tel réglage permet de parfaire le centrage de l'image de la mire 8 sur les tubes d'analyse 11, 12 et 13 représentés sur la figure 1. Là encore, le réglage nécessite que l'objectif de prise de vues 1 soit momentanément retiré.

Il est à noter que, afin d'éviter un déplacement par glissement sur le rebord 110 des pointes des vis 102, 103 et 104, la surface du rebord 110 présente un creux conique, non apparent sur la figure 2, dans lequel est placée la pointe de la vis 104 et une rainure longitudinale, 109, dans laquelle est placée la pointe de la vis 103; la pointe de la vis 102 s'appuie sur une partie plane du rebord 110.

La présente invention n'est par limitée à l'exemple décrit, c'est ainsi par exemple que les prismes 6 et 10 pourraient être remplacés par des miroirs, que le prisme 6 pourrait être associé à un dispositif permettant le réglage de son orientation, ce dispositif pouvant être semblable à celui qui est associé au prisme 10. C'est ainsi également que l'objectif du diascope pourrait être constitué de plusieurs blocs optiques mécaniquement distincts dont un au moins pourrait être réglé d'une façon analogue à la façon dont est réglé l'objectif 9. De même, au lieu que le diascope comporte une fente 14 (figure 2) commune au porte-objet et à l'objectif, il pourrait comporter des fentes différentes pour le porte-objet et l'objectif ou chacun des blocs optiques distincts d'un objectif; cela nécessiterait que ces différentes fentes soient disposées sur un trajet optique commun et pour cela, par exemple, qu'elles soient alignées et que la paroi entre deux fentes consécutives soit percée de manière à laisser le passage au faisceau lumineux du diascope.

Une autre variante de diascope selon l'invention pourrait, au lieu du condenseur qui, sur la figure 1, fait partie de la source lumineuse 5, comporter un condenseur de lumière réglable, dont une partie au moins serait montée dans la fente 14 (figure 2) et réglée comme l'objectif 9 (figures 1 et 2).

Il est à noter de plus que l'invention trouve son application non seulement dans les caméras de télévision en couleur mais également dans les caméras de télévision en noir et blanc.

## Revendications

1. Diascope pour caméra de télévision, comportant: un support (3) et une porte-objet (7), un objectif (9) et un dispositif déviateur de rayons lumineux (10) fixés sur le support, caractérisé en ce que, dans le but de permettre des réglages optiques, il comporte également un premier (72, 73) et un deuxième (92, 93) moyen de pression solidaires du support et tendant à enfoncer le porte-objet et l'objectif dans une fente rectiligne (14) pratiquée dans le support et dont la section s'évase du fond vers le haut, et un moyen de liaison (101—106) entre le dispositif déviateur et le support, ce moyen de liaison comportant: un moyen de fixation (101) solidaire du dispositif déviateur; trois moyens d'écartement règlables (102, 103, 104) donnant chacun un écartement réglable entre un point du support et un point du moyen de fixation; un troisième moyen de pression (105, 106) solidaire du support et tendant à amener le moyen de fixation en contact avec le support.

2. Diascope selon la revendication 1, caractérisé en ce que le porte-objet (7) a la forme d'un cylindre muni d'au moins une paire de facettes parallèles (70) destinées à permettre l'orientation angulaire du porte-objet par une rotation autour de l'axe du cylindre à l'aide de moyens de préhension ayant deux surfaces en regard dont l'écartement correspond à la distance entre les facettes d'une paire.

3. Diascope selon la revendication 1, caractérisé en ce que l'objectif (9) a la forme d'un cylindre et comporte au moins un point d'appui destiné à permettre le réglage de la position de l'objectif par application sur le point d'appui d'une force tendant à déplacer l'objectif, selon un trajet rectiligne, à l'intérieur de la fente (14).

4. Diascope selon l'une quelconque des revendications précédentes caractérisé en ce que le premier (72, 73) et le deuxième (92, 93) moyen de pression comportent des ressorts à lame, fixés à l'une de leurs extrémités au support (3) et dont l'autre extrémité exerce sur le porte-objet (7) une pression tendant à enfoncer le porte-objet dans la fente (14) pour ce qui est du premier moyen de pression et sur l'objectif (9) une pression tendant à enfoncer l'objectif dans la fente pour ce qui est du deuxième moyen de pression.

5. Diascope selon la revendication 1, caractérisé en ce que les trois moyens d'écartement réglables (102, 103, 104) comportent respectivement trois vis à axes parallèles, disposées en triangle, se vissant dans le moyen de fixation (101) qu'elles traversent de part en part, en ce que les pointes de trois vis reposent sur le support (3) et en ce que le troisième moyen de pression (105, 106) comporte n ressorts à lame (n au moins égal à 1) fixés à l'une de leurs extrémités au support et faisant pression sur le moyen de fixation au voisinage de leur autre extrémité.

## Claims

1. Diascope for a television camera, comprising: a support (3) and an object holder (7), an objective (9) and a light beam deflector device (10) secured on the support, characterized in that, in order to allow optical adjustments, it further comprises first (72, 73) and second (92, 93) pressure means mounted on the support and tending to push the object holder and the objective into a rectilinear slot (14) provided in the support and the cross-section of which widens from the bottom upwardly, and connection means (101, 106) between the deflector device and the support, this connection means comprising: securing means (101) rigidly connected with the deflector device; three adjustable spacing means (102, 103, 104) each providing an adjustable spacing between one point of the support and one point of the securing means; third pressure means (105, 106) rigidly connected with the support and tending to contact the securing means against the support.

2. Diascope in accordance with claim 1, characterized in that the object holder (7) is shaped as a cylinder having at least one pair of parallel flats (70) intended to allow angular orientation of the object holder by rotation about the cylinder axis using grasping means having two opposed surfaces the spacing of which corresponds to the distance between the flats of one pair.

3. Diascope in accordance with claim 1, characterized in that the objective (9) is of cylindrical shape and comprises at least one supporting point intended to allow adjustment of the position of the objective by exerting a force on the supporting point tending to displace the objective along a rectilinear track within the slot (14).

4. Diascope in accordance with any of the preceding claims, characterized in that the first (72, 73) and the second (92, 93) pressure means comprise leaf springs secured on the support (3) at one of their ends and the other end exerting a pressure onto the object holder (7) tending to push the object holder into the slot (14) as far as the first pressure means are concerned, and a pressure on the objective (9) tending to push the objective into the slot, as far as the second pressure means are concerned.

5. Diascope in accordance with claim 1, characterized in that the three adjustable spacing means (102, 103, 104) comprise three screws having parallel axes and in triangular arrangement which are screwed into the securing means (101) which is crossed thereby from one side to the other, in that the tips of the three screws are resting on the support (3) and in that the third pressure means (105, 106) comprises n leaf springs (n at least equal to 1) secured at one of their ends on the support and urging on the securing means in the neighbourhood of their other ends.

## Patentansprüche

1. Diaskop für Fernsehkamera, enthaltend:

einen Träger (3) und einen Objectträger (7), ein Objectiv (9) sowie eine Strahlenablenkvorrichtung (10), die auf dem Träger befestigt sind, dadurch gekennzeichnet, daß es zur Ermöglichung von optischen Justierungen ferner eine erste (72, 73) und eine zweite (92, 93) mit dem Träger fest verbundene Andrückeinrichtung umfaßt, die bestrebt ist, den Objektträger und das Objektiv in einen geradlinigen Schlitz (14) einzudrücken, der in dem Träger angeordnet ist und dessen Querschnitt vom Grund ausgehend nach oben sich erweitert, und eine Verbindungseinrichtung (101—106) zwischen der Ablenkvorrichtung und dem Träger umfaßt, wobei diese Verbindungseinrichtung enthält: eine mit der Ablenkvorrichtung fest verbundene Befestigungseinrichtung (101); drei einstellbare Abstandshalter (102, 103, 104), die jeweils einen einstellbaren Abstand zwischen einem Punkt des Trägers und einem Punkt der Befestigungseinrichtung ergeben; eine dritte Andrückeinrichtung (105, 106), die mit dem Träger fest verbunden ist und bestrebt ist, die Befestigungseinrichtung in Berührung mit dem Träger zu bringen.

2. Diaskop nach Anspruch 1, dadurch gekennzeichnet, daß der Objektträger (7) die Form eines Zylinders aufweist, der mit wenigstens zwei parallelen Facetten (70) versehen ist, die dazu bestimmt sind, die Winkelorientierung des Objektträgers durch Drehung un die Zylinderachse mittels einer Greifeinrichtung zu ermöglichen, die zwei einander gegenüberliegende Oberflächen aufweist, deren Abstand demjenigen zwischen den zwei Facetten entspricht.

3. Diaskop nach Anspruch 1, dadurch gekennzeichnet, daß das Objektiv (9) die Form eines Zylinders aufweist und wenigstens einen Stützpunkt umfaßt, der dazu bestimmt ist, die Einstellung der Lage des Objektivs durch Ausüben einer Kraft auf den Aufstützpunkt zu ermöglichen, welche bestrebt ist, das Objektiv entlang einer geradlinigen Bahn im Inneren des Schlitzes (14) zu verschieben.

4. Diaskop nach einem der vorstehenden Ansprüche, dadurch gekennzeichnet, daß die erste (72, 73) und die zweite (92, 93) Andrückeinrichtung Blattfedern umfassen, die an einem ihrer Enden an dem Träger (3) befestigt sind und deren anderes Ende auf den Objektträger (7) einen Druck ausübt, der bestrebt ist, den Objektträger in den Schlitz (14) hineinzudrücken, was die erste Andrückeinrichtung betrifft, bzw. auf das Objektiv (9) einen Druck ausübt, der bestrebt ist, das Objektiv in den Schlitz hineinzudrücken, was die zweite Andrückeinrichtung betrifft.

5. Diaskop nach Anspruch 1, dadurch gekennzeichnet, daß die drei einstellbaren Abstandshalter (102, 103, 104) drei Schrauben mit parallelen Achsen in dreieckförmiger Anordnung enthalten, die in die Befestigungseinrichtung (101) einschraubbar sind, welche sie vollständig durchqueren, daß die Spitzen der drei Schrauben auf dem Träger (3) ruhen und daß die dritte Ändrückeinrichtung (105, 106) n Blattfedern (n = wenigstens gleich 1) umfaßt, die an ihrem einen Ende am Träger befestigt sind und in der Nähe ihres anderen Endes einen Druck auf die Befestigungseinrichtung ausüben.

# FIG_1

## FIG. 2